# EUROPÄISCHE PATENTSCHRIFT

(11) **EP 2 985 667 B1**
(45) Veröffentlichungstag und Bekanntmachung des Hinweises auf die Patenterteilung: **01.08.2018**
(21) Anmeldenummer: 14180841.0
(22) Anmeldetag: 13.08.2014
(51) Int. Cl.: G05D 7/01, F24D 19/10

(54) **Voreinstellbarer Durchflussmengenregler**
Pre-adjustable flow rate regulator
Régulateur de débit préréglable

(43) Veröffentlichungstag der Anmeldung: 17.02.2016
(73) Patentinhaber: IMI Hydronic Engineering International SA, 1262 Eysins (CH)
(72) Erfinder: Schmidt, Carina, 45138 Essen (DE); Henke, Bernhard, 59929 Brilon (DE)
(74) Vertreter: Wickord, Wiro

(56) Entgegenhaltungen:
- WO-A1-2006/031161
- DE-A1-102009 033 376

## Beschreibung

Die Erfindung betrifft einen voreinstellbaren Durchflussmengenregler für eine Heizungsanlage nach dem Oberbegriff des Patentanspruchs 1.

Aus der deutschen Patentanmeldung 10 2009 033 376.2 ist ein gattungsgemäßer Durchflussmengenregler bekannt. Der Durchflussmengenregler sieht vor, dass über eine dem Voreinstellstutzen zugeordnete, drehbare Handhabe ein Durchfluss des Heizmediums mengenmäßig voreingestellt werden kann. Hierzu wird eine Relativposition zwischen einem ortsfest angeordneten Topf des Durchflussmengenreglers, welcher in einer Stirnseite eine Ausnehmung aufweist, und einem verschiebbaren jedenfalls abschnittsweise in die Ausnehmung des Topfes eingreifenden Kegel verändert.

Zur Regelung der über die Handhabe voreingestellten Durchflussmenge ist eine verschiebbar in Bezug zu dem Kegel und dem Topf angeordnete Hülse vorgesehen. Die Hülse gibt eine Durchflussöffnung für das Heizmedium, über die dieses dem Mengenreguliermodul zugeführt wird, vollständig oder teilweise frei beziehungsweise
verschließt die Durchflussöffnung. Mit der Veränderung eines Durchflussquerschnitts der ersten Durchflussöffnung für das Heizmedium wird der Durchfluss erhöht beziehungsweise reduziert. Mit der Durchflussmenge ändert sich eine Druckdifferenz, welche über der zwischen dem Kegel und der an dem Topf vorgesehenen Ausnehmung gebildeten zweiten Durchflussöffnung auftritt. Die mittels einer Feder gegen den Topf verspannte Hülse verschiebt sich infolge der veränderten Druckverhältnisse so, dass sein freier Querschnitt der ersten Durchflussöffnung für das Heizmedium der Strömungssituation angepasst eingestellt wird. Es gelingt insofern, die Durchflussmenge für das Heizmedium voreinzustellen und den voreingestellten Wert dynamisch zu regeln.

Der aus dem Stand der Technik bekannte Aufbau des Durchflussmengenreglers hat sich in der Praxis grundsätzlich bewährt und weite Verbreitung gefunden. Insbesondere die einfache und exakte Möglichkeit zur Voreinstellung der Durchflussmenge bietet erhebliche Vorteile. Gleichwohl besteht der Wunsch, den Durchflussmengenregler kompakter zu konstruieren und den Aufbau zu vereinfachen. Hierin liegt die Aufgabe der vorliegenden Erfindung.

Zur Lösung der Aufgabe weist die Erfindung die Merkmale des Patentanspruchs 1 auf..

Der besondere Vorteil der Erfindung besteht darin, dass durch das ortsfeste Anordnen des Topfes und den verschiebbar angeordneten Kegel insgesamt ein sehr kompakter Aufbau für das Mengenreguliermodul erreicht wird. Es reduziert sich insofern der Bauraumbedarf mit der Folge, dass der Durchflussmengenregler ein für Heizungsanlagen genutztes, standardisiertes Gehäuse aufweisen kann. Insgesamt wird insofern die Integration des Durchflussmengenreglers in bestehende Heizungsanlagen sowie bei Neuinstallationen begünstigt.

In Bezug auf die Voreinstellung der Durchflussmenge wird die Kinematik der Bauteile invertiert, um die Kompaktheit zu fördern. Der vormals ortsfest angeordnete Kegel ist nunmehr beweglich angeordnet, wohingegen der vormals bewegliche Topf nunmehr ortsfest vorgesehen ist. Unverändert erhalten bleibt die rotatorische Betätigung der Handhabe, an welche der Installateur gewohnt ist. Dies begünstigt die Akzeptanz der Lösung beim Kunden und beugt einer Fehlbedienung vor.

Nach einer bevorzugten Ausführungsform der Erfindung weist der Kegel zur Umsetzung der Drehbewegung der Handhabe in eine Längsbewegung ein Führungselement auf, welches in eine korrespondierend gestaltete Führungsnut des Mengenreguliermoduls eingreift. Die Führungsnut ist beispielsweise nach Art einer Steuerkulisse ausgebildet. Beispielsweise sind das Führungselement und die Führungsnut gewindeartig ausgebildet. Vorteilhaft ergibt sich durch das Vorsehen der Zwangsführung eine exakte Umsetzung der Drehbewegung in eine kombinierte Dreh- und Längsbewegung. Die zur Einstellung des Querschnitts der zweiten Durchflussöffnung relevante Längsbewegung des Kegels ist hierbei derart exakt, dass die Durchflussmenge im relevanten Volumenstrombereich von zirka 10 l/h bis 200 l/h feinfühlig und präzise eingestellt werden kann. Überdies ergibt sich die Möglichkeit, eine Selbsthemmung im Bereich des Führungselements und der Führungsnut auszubilden mit der Folge, dass einer unbeabsichtigten und unbemerkten Dejustage entgegengewirkt ist.

Der Kegel ist drehfest sowie axial verschiebbar an dem Übertragungsglied festgelegt. An dem Übertragungsglied ist zur Festlegung desselben an dem Kegel ein Verschiebeabschnitt vorgesehen, welcher zur Übertragung der Drehbewegung der Handhabe auf den Kegel ein von einer Kreisform abweichenden Querschnitt aufweist und welcher jedenfalls abschnittsweise in einer an dem Kegel vorgesehenen Ausnehmung eingreift. Zur Realisierung der Längsverschiebbarkeit von Kegel und Übertragungsglied ist zwischen der Ausnehmung und dem Verschiebeabschnitt eine Spielpassung vorgesehen. Vorteilhaft kann die funktionsnotwendige Übertragung der Betätigungsbewegung der Handhabe sicher und zuverlässig auf den Kegel übertragen und in eine kombinierte Dreh- und Längsbewegung umgesetzt werden. Die konstruktive Gestaltung der beteiligten Elemente, insbesondere des Übertragungsglieds, ist hierbei einfach. Beispielsweise kann das Übertragungsglied im Bereich des Verschiebeabschnitts nach Art eines Vierkants oder eines anderen geeigneten Vielkants ausgebildet sein. Während die Längsverschiebbarkeit zwischen dem Kegel und dem Übertragungsglied durch das Vorsehen der Spielpassung gewährleistet ist, kann infolge der Querschnittsgeometrie die Drehbewegung des Übertragungsglieds formschlüssig auf den Kegel übertragen werden.

Nach einer Weiterbildung der Erfindung ist das Übertragungsglied stiftförmig ausgebildet. Beispielsweise sind das Übertragungsglied, die Handhabe, der Kegel, die Hülse beziehungsweise der Topf koaxial zueinander vorgesehen. Insbesondere kann vorgesehen sein, dass in dem Gehäuse des Durchflussmengenreglers eine Regulierbaugruppe eines Temperaturreglers eingesetzt ist und dass die Regulierbaugruppe einen Fühlerstift aufweist, welcher mit einem Temperaturgeber des Temperaturreglers zusammenwirkt und welcher im Zuge einer Funktionsintegration zugleich als das Übertragungsglied des Durchflussmengenreglers vorgesehen ist. Vorteilhaft begünstigt die Verwendung des Fühlerstifts als Übertragungsglied für den Durchflussmengenregler einen kompakten Aufbau. Es ergibt sich eine konstruktive Vereinfachung dahingehend, dass durch die Doppelverwendung die Anzahl der Bauteile reduziert wird. Mit der Reduzierung der Bauteilanzahl sinkt der Montageaufwand. Zusätzlich ist eine toleranzarme Zuordnung des Mengenreguliermoduls zu der Regulierbaugruppe begünstigt, da der Fühlerstift als gemeinsame Komponente eine Lagezuordnung realisiert und die relative Position der Komponenten zueinander definiert.

Nach einer Weiterbildung der Erfindung ist als Teil des Mengenreguliermoduls ein an den Topf angelegter, ortsfest vorgesehener Reguliereinsatz realisiert. Die erste Durchflussöffnung, welche zur Regulierung der voreingestellten Durchflussmenge über die verschiebbar angeordnete Hülse hinsichtlich ihrer Größe eingestellt werden kann, ist an dem Reguliereinsatz vorgesehen. Gemeinsam mit dem Topf definiert der Reguliereinsatz einen Wirkraum des Mengenreguliermoduls, in dem die Hülse längsverschiebbar gehalten ist. Beispielsweise ist die erste Durchflussöffnung an dem Reguliereinsatz mantelseitig vorgesehen. Der Reguliereinsatz kann insbesondere becherförmig ausgebildet sein. Der Reguliereinsatz definiert zusammen mit dem Topf einen hinsichtlich seiner Größe bestimmten Wirkraum des Mengenreguliermoduls. Die verschiebbare Hülse des Mengenreguliermoduls ist vorteilhaft in dem Wirkraum angeordnet mit der Folge, dass ein maximaler Bauraumbedarf des Mengenreguliermoduls durch den Topf und den Reguliereinsatz bestimmt sind. Die definierten räumlichen Verhältnisse begünstigen insofern die Integration des Mengenreguliermoduls in eine bestehende Heizungsanlage beziehungsweise in ein Gehäuse des Durchflussmengenreglers.

Nach einer Weiterbildung der Erfindung ist an dem Mengenreguliermodul zulaufseitig ein Sieb für das Heizmedium vorgesehen. Insbesondere umgreift das Sieb den Reguliereinsatz im Bereich der ersten Durchflussöffnung mantelseitig beziehungsweise stirnseitig. Vorteilhaft wird durch das Vorsehen des Siebs das Eintreten von Fremdstoffen in das Mengenreguliermodul verhindert. Das Mengenreguliermodul und insbesondere seine beweglich zueinander vorgesehenen Komponenten werden vor einer Beschädigung beziehungsweise Verschmutzung geschützt. Insbesondere kann vorgesehen sein, dass das Sieb auswechselbar gehalten ist und im Rahmen von Wartungsarbeiten erneuert werden kann.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Ausführungsbeispiele der Erfindung werden nachfolgend anhand von Zeichnungen näher erläutert.

Es zeigen:
- Fig. 1: eine Schnittdarstellung durch einen erfindungsgemäßen Durchflussmengenregler, wobei an dem Gehäuse des Durchflussmengenreglers zusätzlich eine Regulierbaugruppe eines Temperaturreglers vorgesehen ist und
- Fig. 2: eine Detailvergrößerung des Ausschnitts X nach Fig. 1.

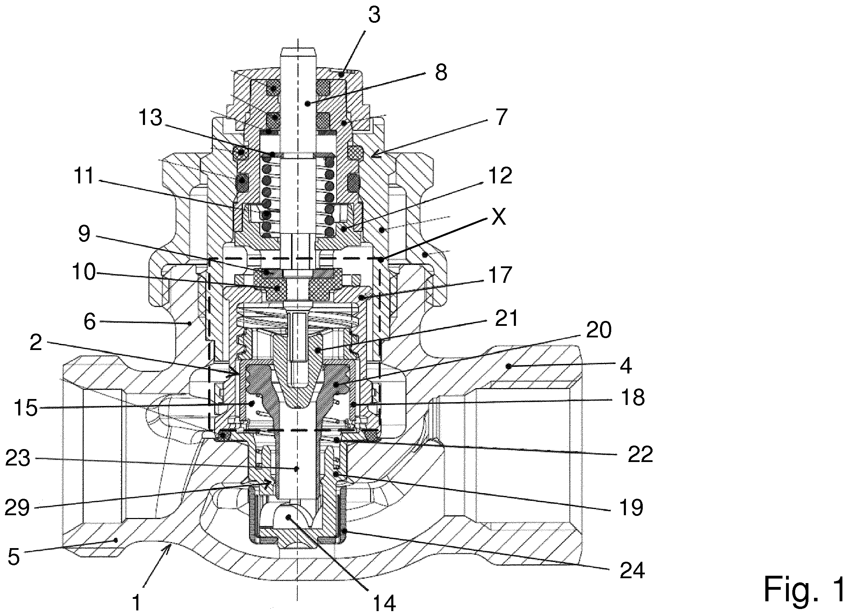

Ein Durchflussmengenregler für eine Heizungsanlage nach Fig. 1 umfasst als wesentliche Komponenten ein Gehäuse 1, ein in dem Gehäuse 1 vorgesehenes Mengenreguliermodul 2 sowie eine Handhabe 3. An dem Gehäuse 1 ist ein Zulaufstutzen 4 für ein Heizmedium, ein Ablaufstutzen 5 für das Heizmedium sowie ein das Mengenreguliermodul 2 aufnehmender Voreinstellstutzen 6 vorgesehen. Das Mengenreguliermodul 2 dient dazu, eine Durchflussmenge für das Heizmedium zu ändern. Die Durchflussmenge kann insbesondere in Abhängigkeit einer Voreinstellung des Mengenreguliermoduls 2 und einer Druckdifferenz variieren. Die Voreinstellung der Durchflussmenge erfolgt über die Handhabe 3.

Es ist weiterhin eine Regulierbaugruppe 7 eines Temperaturreglers vorgesehen. Die Regulierbaugruppe 7 umfasst als funktionswesentliche Komponenten einen langgestreckt ausgebildeten Fühlerstift 8 sowie einen an dem Fühlerstift 8 gehaltenen und radial von demselben abragenden Teller 9 und eine an den Teller 9 und den Fühlerstift 8 angesetzte Dichtung 10. Der Fühlerstift 8 der Regulierbaugruppe 7 wirkt mit einem nicht dargestellten Temperaturfühler des Temperaturreglers zusammen. In Abhängigkeit einer Temperaturvorgabe und einer über den Temperaturfühler erkannten Temperatur wird der Fühlerstift 8 längsbetätigt. Infolge der Längsbetätigung des Fühlerstifts 8 verschiebt sich der Teller 9 mit der daran festgelegten Dichtung 10.

Die Betätigung des Fühlerstifts 8 erfolgt gegen eine Druckfeder 11, die sich an einem Regulierteller 12 der Regulierbaugruppe 7 einerseits und einem an dem Fühlerstift 8 festgelegten Haltering 13 andererseits abstützt. Infolge der Längsbetätigung des Fühlerstifts 8 variiert ein zwischen der Dichtung 10 und einem der Dichtung 10 zugeordneten Ventilsitz gebildeter Durchflussspalt für das Heizmedium mit der Folge, dass Einfluss auf die Durchflussmenge des temperierten Heizmediums und damit auf die Heizleistung der Heizungsanlage genommen wird. Wie der Temperaturfühler ist auch ein Einstellelement zur Vorgabe eines Temperatursollwerts außerhalb des Gehäuses 1 angeordnet und nicht dargestellt.

Das Heizmedium wird dem Gehäuse 1 und dem in dem Gehäuse 1 verbauten Mengenreguliermodul 2 über den Zulaufstutzen 4 zugeführt. Es gelangt über eine an dem Mengenreguliermodul 2 vorgesehene erste Durchflussöffnung 14 in einen Wirkraum 15 des Mengenreguliermoduls 2. Das Heizmedium durchströmt weiter eine zweite Durchflussöffnung 16 des Mengenreguliermoduls 2 und gelangt in den Wirkbereich der Regulierbaugruppe 7 des Temperaturreglers. Die Regulierbaugruppe 7 des Temperaturreglers ist insofern dem Mengenreguliermodul 2 in eine Flussrichtung des Heizmediums nachgelagert. Vorliegend ist die Regulierbaugruppe 7 des Temperaturreglers vollständig geschlossen dargestellt, das heißt, der Durchflussspalt für das Heizmedium ist nicht ausgebildet. Der Teller 9 mit der Dichtung 10 ist dichtend an dem Ventilsitz angelegt, der durch ein Zwischenstück 17 des Mengenreguliermoduls 2 gebildet ist. Sofern der Teller 9 mit der Dichtung 10 von dem Zwischenstück 17 entfernt wird, bildet sich zwischen dem Zwischenstück 17 und der Dichtung 10 der dritte Durchflussspalt als weitere Durchflussöffnung für das Heizmedium. Das Heizmedium gelangt sodann über den Ablaufstutzen 5 in nicht dargestellte weitere Rohrleitungen der Heizungsanlage.

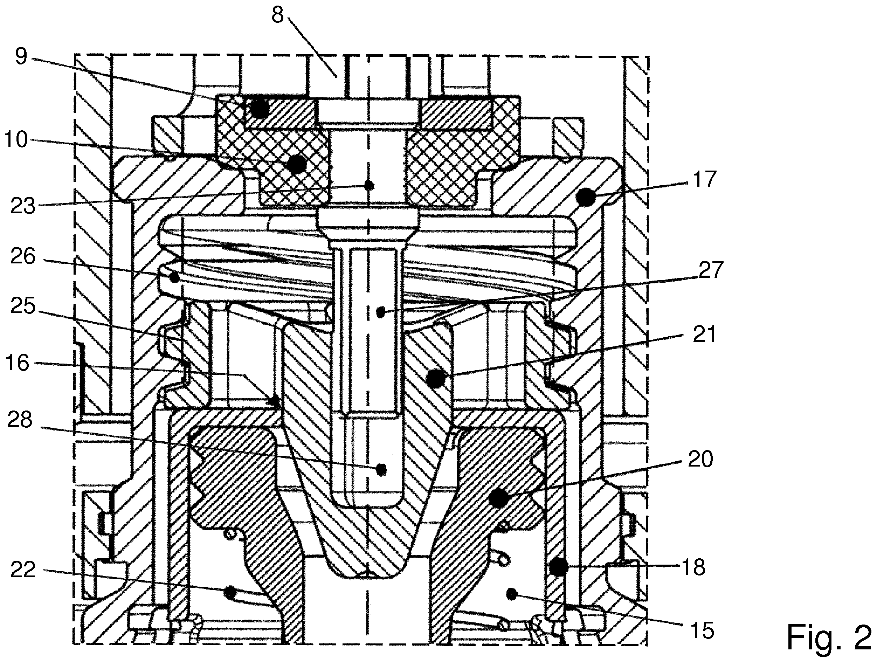

Im Weiteren wird detailliert die Funktion des Mengenreguliermoduls 2 dargestellt. Es wird hierzu ergänzend Bezug genommen auf die Detailvergrößerung des Ausschnitts X, welcher in Fig. 2 wiedergegeben ist.

Das Mengenreguliermodul 2 umfasst als wesentliche Funktionskomponenten neben dem Zwischenstück 17 einen ortsfest angeordneten Topf 18, an dem stirnseitig eine Ausnehmung vorgesehen ist, einen an den Topf 18 angesetzten, ortsfest vorgesehenen und becherartig ausgebildeten Reguliereinsatz 19, eine in den Topf 18 und dem Reguliereinsatz 19 längsverschiebbar vorgesehene Hülse 20 sowie einen Kegel 21, welcher jedenfalls abschnittsweise in die stirnseitige Ausnehmung des Topfes 18 hineinragt. Zusätzlich ist zwischen der Hülse 20 und dem Reguliereinsatz 19 eine Vorspannfeder 22 montiert, über welche die Hülse 20 gegen die Stirnseite des Topfes 18 gedrückt ist. Das Zwischenstück 17, der Topf 18, der Reguliereinsatz 19, die Hülse 20, der Kegel 21 und die Vorspannfeder 22 sind in Bezug zu einer Längsachse des Fühlerstifts 8 definierten Längsmittelachse 23 koaxial vorgesehen. Das Zwischenstück 17, welches topfförmig ausgebildet ist und im Bereich einer Stirnfläche den Ventilsitz für die Dichtung 10 der Regulierbaugruppe 7 aufweist, umgreift den Kegel 21 und den Topf 18 mantelseitig. Der Reguliereinsatz 19 schließt an das Zwischenstück 17 des Mengenreguliermoduls 2 an und begrenzt zusammen mit dem Topf 18 den Wirkraum 15 des Mengenreguliermoduls 2. An dem Reguliereinsatz 19 ist mantelseitig die erste Durchflussöffnung 14 für das Heizmedium vorgesehen. Um einer Verschmutzung des Mengenreguliermoduls 2 vorzubeugen, ist der Reguliereinsatz 19 im Bereich der ersten Durchflussöffnung 14 mantelseitig und im Bereich einer Stirnseite von einem Sieb 24 umgeben.

An dem Kegel 21 ist außenmantelseitig ein Gewinde 25 als Führungselement für den Kegel 21 vorgesehen. Ein korrespondierend gestaltetes Gewinde 26, welches nach Art eines Innengewindes als Führungsnut für das Führungselement 25 ausgebildet ist, weist das Zwischenstück 17 auf. Der Kegel 21 greift mit dem Gewinde 25 so in das Gewinde 26 des Zwischenstücks 17 ein, dass eine Rotation des Kegels 21 um die Längsmittelachse 23 zugleich zu einer Linearverschiebung des Kegels 21 in die Richtung der Längsmittelachse 23 führt. Abhängig von der Lage des Kegels 21 verändert sich hierbei die Größe der zwischen der Ausnehmung des Topfes 18 und dem Kegel 21 gebildeten zweiten Durchflussöffnung 16 für das Heizmedium.

Zur Betätigung des Kegels 21 und zur Voreinstellung eines Querschnitts der zweiten Durchflussöffnung 16 dient die Handhabe 3. Zur Übertragung einer Rotationsbewegung der Handhabe 3 auf den Kegel 21 ist als Übertragungsglied der Fühlerstift 8 der Regulierbaugruppe 7 vorgesehen. Der Fühlerstift 8 ist drehfest mit der Handhabe 3 und/oder der Regulierbaugruppe 7 verbunden. Eine Rotationsbewegung der Handhabe 3 wird somit auf den Fühlerstift 8 übertragen. Zusätzlich ist ein Verschiebeabschnitt 27 des Fühlerstifts 8 in einer Ausnehmung 28 des Kegels 21 geführt. Zur Gewährleistung einer Längsverschiebbarkeit des Kegels 21 relativ zum Fühlerstift 8 ist zwischen der Ausnehmung 28 und dem Verschiebeabschnitt 27 des Fühlerstifts 8 eine Spielpassung gebildet. Ein Querschnitt des Fühlerstifts 8 im Bereich des Verschiebeabschnitts 27 weicht von einer Kreisform ab. Hierdurch wird erreicht, dass die Rotationsbewegung der Handhabe 3 über den Fühlerstift 8 auf den Kegel 21 übertragen wird. Infolge der Rotation wird der Kegel 21 zusätzlich in Richtung der Längsmittelachse 23 längsverschoben und abhängig von der Drehrichtung an dem Topf 18 und die daran vorgesehene Ausnehmung angenähert oder von dieser entfernt. Folglich kann durch Betätigung der Handhabe 3 der Querschnitt der zweiten Durchflussöffnung 16 eingestellt werden. Beispielhaft ist das Mengenreguliermodul 2 vorliegend so ausgeführt, dass zirka eine vollständige Drehung um die Längsmittelachse 23 ausgeführt wird, um den Kegel 21 von der dargestellten Schließposition in eine Öffnungsposition zu bringen, in der die zweite Durchflussöffnung 16 den maximalen Querschnitt aufweist und der Volumenstrom des Heizmediums maximal groß ist.

Um den mittels der Handhabe 3 eingestellten Vorgabewert für die Durchflussmenge des Heizmediums im laufenden Betrieb zu regeln, ändert sich ein wirksamer Durchflussquerschnitt der ersten Durchflussöffnung 14 abhängig von der Position der Hülse 20 in dem Wirkraum 15. Während die erste Durchflussöffnung 14 in der dargestellten Anordnung vollständig geöffnet ist und einen maximalen wirksamen Querschnitt aufweist, reduziert sich der wirksame Querschnitt der ersten Durchflussöffnung 14, wenn die Hülse 20 in Richtung des Reguliereinsatzes 19 längsverschoben wird. Zu der Längsverschiebung kommt es in Abhängigkeit von dem Druckverhältnis in dem Mengenreguliermodul 2. Ergibt sich während des Betriebs eine Durchflussmenge oberhalb der Voreinstellung, verschiebt sich die Hülse 20 in Richtung des Reguliereinsatzes 19. Infolge der Verschiebung wird der wirksame Querschnitt der ersten Durchflussöffnung 14 reduziert und damit die Durchflussmenge des Heizmediums herabgesetzt mit der Folge, dass die Druckdifferenz sinkt und die Hülse zurückweicht.

Die Hülse 20 weist im Bereich einer dem Kegel 21 zugewandten Stirnseite eine innenkegelförmige Geometrie auf. Durch die innenkegelförmige Geometrie ist erreicht, dass ein zwischen dem Kegel 21 und der Hülse 20 gebildeter Ringspalt für das Heizmedium unabhängig von der Lage der Hülse 20 in dem Wirkraum 15 im Wesentlichen gleich groß ist. Die Hülse 20 ist zum einen im Bereich des Innenkegels außenmantelseitig an dem Topf 18 abgestützt. Ferner definiert eine Ausformung 29, welche an dem Reguliereinsatz 19 vorgesehen ist, eine weitere Stützstelle für die Hülse 20.

Gleiche Bauteile und Bauteilfunktionen sind durch gleiche Bezugszeichen gekennzeichnet.

## Patentansprüche

1. Voreinstellbarer Durchflussmengenregler für eine Heizungsanlage mit einem Gehäuse (1), welches einen Zulaufstutzen (4) für ein Heizmedium, einen Ablaufstutzen (5) für das Heizmedium und einen Voreinstellstutzen (6) aufweist, mit einem Mengenreguliermodul (2), welches in Abhängigkeit einer Voreinstellung einen Durchfluss für das Heizmedium verändert, und mit einer Handhabe (3), welche mit einem beweglich angeordneten Bauteil des Mengenreguliermoduls (2) zusammenwirkt zur Voreinstellung des Durchflusses, wobei das Mengenreguliermodul (2) einen ortsfest vorgesehenen Topf (18) mit einer Ausnehmung, einen jedenfalls abschnittsweise in die Ausnehmung eingreifenden Kegel (21) sowie eine axial verschiebbar in dem Topf (18) angeordnete Hülse (20) vorsieht, welche an einer der Ausnehmung zugewandten Stirnseite einen Innenkegel aufweist, welcher eine Öffnung der Hülse (20) bildet und im Zusammenwirken mit dem Kegel (21) einen ringförmigen Durchflussspalt für das Heizmedium definiert, wobei in Abhängigkeit von einer Relativposition zwischen dem Topf (18) und der Hülse (20) ein Durchflussquerschnitt einer ersten Durchflussöffnung (14), über die das Heizmedium dem Mengenreguliermodul (2) zugeführt ist, variiert und wobei der Kegel (21) beweglich vorgesehen ist, **dadurch gekennzeichnet, dass** durch ein Betätigen der Handhabe (3) über ein mit der Handhabe (3) einerseits und dem Kegel (21) andererseits zusammenwirkendes Übertragungsglied der Kegel (21) des Mengenreguliermoduls (2) eine kombinierte Dreh- und Längsbewegung ausführt derart, dass eine Relativposition zwischen der Ausnehmung in dem Topf (18) und dem Kegel (21) sich ändert und infolge dessen ein Durchflussquerschnitt einer zwischen dem Kegel (21) und der an dem Topf (18) vorgesehenen zweiten Durchflussöffnung (16) einstellbar ist, und dass an dem Übertragungsglied ein den Kegel (21) führender Verschiebeabschnitt (27) vorgesehen ist, welcher zur Übertragung der Drehbewegung der Handhabe (3) auf den Kegel (21) eine von einer Kreisform abweichende Querschnittsgeometrie aufweist und welcher jedenfalls abschnittsweise in eine an dem Kegel (21) vorgesehene Ausnehmung (28) eingreift, wobei zur Realisierung der Längsverschiebbarkeit zwischen der Ausnehmung (28) und dem Verschiebeabschnitt (27) eine Spielpassung ausgebildet ist.

2. Durchflussmengenregler nach Anspruch 1, **dadurch gekennzeichnet, dass** der Kegel (21) zur Umsetzung einer Drehbewegung der Handhabe (3) in eine Längsbewegung ein Führungselement (25) aufweist, welches in eine korrespondierend gestaltete, während der Betätigung der Handhabe (3) ortsfest vorgesehene Führungsnut (26) des Mengenreguliermoduls (2) eingreift und/oder geführt ist.

3. Durchflussmengenregler nach Anspruch 2, **dadurch gekennzeichnet, dass** das Führungselement (25) und die Führungsnut (26) gewindeartig ausgebildet sind und zusammenwirken.

4. Durchflussmengenregler nach einem der Ansprüche 1 bis 3, **dadurch gekennzeichnet, dass** die Handhabe (3) und/oder eine Regulierbaugruppe (7) eines Temperaturreglers drehfest an dem Übertragungsglied gehalten sind und dass der Kegel (21) drehfest sowie axial verschiebbar an dem Übertragungsglied gehalten ist.

5. Durchflussmengenregler nach einem der Ansprüche 1 bis 4, **dadurch gekennzeichnet, dass** das Übertragungsglied stiftförmig ausgebildet ist und/oder dass das Übertragungsglied einerseits und die Handhabe (3) und/oder der Kegel (21) und/oder die Hülse (20) und/oder der Topf (18) andererseits koaxial zueinander vorgesehen sind.

6. Durchflussmengenregler nach Anspruch 4 oder 5, **dadurch gekennzeichnet, dass** das Gehäuse (1) die Regulierbaugruppe (7) aufnimmt und dass die Regulierbaugruppe (7) einen Fühlerstift (8) aufweist, welcher mit einem Temperaturfühler des Temperaturreglers zusammenwirkt und welcher als Übertragungsglied vorgesehen ist.

7. Durchflussmengenregler nach einem der Ansprüche 1 bis 6, **dadurch gekennzeichnet, dass** das Mengenreguliermodul (2) einen an den Topf (18) angelegten, ortsfest vorgesehenen Reguliereinsatz (19) aufweist, wobei an dem Reguliereinsatz (19) die erste Durchflussöffnung (14) für das Heizmedium vorgesehen ist und wobei der Topf (18) zusammen mit dem Reguliereinsatz (19) einen die längsverschiebbare Hülse (20) aufnehmenden Wirkraum (15) des Mengenreguliermoduls (2) definiert.

8. Durchflussmengenregler nach Anspruch 7, **dadurch gekennzeichnet, dass** der Reguliereinsatz (19) becherförmig ausgebildet ist und/oder dass die erste Durchflussöffnung (14) an dem Reguliereinsatz (19) mantelseitig vorgesehen ist.

9. Durchflussmengenregler nach einem der Ansprüche 1 bis 8, **dadurch gekennzeichnet, dass** an dem Mengenreguliermodul (2) zulaufseitig ein Sieb (24) für das Heizmedium vorgesehen ist.

10. Durchflussmengenregler nach Anspruch 9, **dadurch gekennzeichnet, dass** das Sieb (24) den Reguliereinsatz (19) im Bereich der ersten Durchflussöffnung (14) mantelseitig und/oder stirnseitig umgreift.

## Claims

1. Pre-adjustable flow rate regulator for a heating system comprising a housing (1), which has an inlet connector (4) for a heating medium, an outlet connector (5) for the heating medium and a pre-adjustment connector (6), comprising a rate regulation module (2) which alters a flow rate for the heating medium as a function of a pre-adjustment, and comprising a handle (3) which cooperates with a movably arranged component of the rate regulation module (2) to pre-adjust the flow rate, the rate regulation module (2) providing a cup (18), which is provided stationary and comprises a recess, a cone (21) which engages at least in portions in the recess, and a sleeve (20), which is arranged axially displaceable in the cup (18) and which has, on an end face facing the recess, an inner cone, which forms an opening in the sleeve (20) and in cooperation with the cone (21) defines an annular flow column for the heating medium, a flow cross-section of a first flow opening (14), via which the heating medium is supplied to the rate regulation module (2), varying as a function of a relative position between the cup (18) and the sleeve (20), and the cone (21) being provided movably, **characterised in that**, as a result of the handle (3) being actuated via a transmission member, which cooperates with the handle (3) on the one hand and the cone (21) on the other hand, the cone (21) of the rate regulation module (2) performs a combined rotational and longitudinal movement in such a way that a relative position between the recess in the cup (18) and the cone (21) changes and as a result a flow cross section of a second flow opening (16) provided between the cone (21) and the on the cup (18), and **in that** a displacement portion (27) which guides the cone (21) is provided on the transmission member, and has a shape deviating from a circle shape for transmitting the rotational movement of the handle (3) to the cone (21), and at least in portions engages in a recess (28) provided on the cone (21), a loose fit being formed so as to implement the longitudinal displaceability between the recess (28) and the displacement portion (27).

2. Flow rate regulator according to claim 1, **characterised in that** for converting a rotational movement of the handle (3) into a longitudinal movement the cone (21) has a guide element (25), which engages and/or is guided in a correspondingly configured guide groove (26), which is provided stationary during the actuation of the handle (3), of the rate regulation module (2).

3. Flow rate regulator according to claim 2, **characterised in that** the guide element (25) and the guide groove (26) are formed in the manner of threads and cooperate.

4. Flow rate regulator according to any of claims 1 to 3, **characterised in that** the handle (3) and/or a regulation module (7) of a temperature regulator are held rotationally engaged on the transmission member and **in that** the cone (21) is held rotationally engaged and axially displaceable on the transmission member.

5. Flow rate regulator according to any of claims 1 to 4, **characterised in that** the transmission member is formed pin-shaped and/or **in that** the transmission member on the one hand and the handle (3) and/or the cone (21) and/or the sleeve (20) and/or cup (18) on the other hand are provided coaxial with one another.

6. Flow rate regulator according to either claim 4 or claim 5, **characterised in that** the housing (1) accommodates the regulation module (7) and **in that** the regulation module (7) has a sensor pin (8) which cooperates with a temperature sensor of the temperature regulator and which is provided as a transmission member.

7. Flow rate regulator according to any of claims 1 to 6, **characterised in that** the rate regulation module (2) has a regulation insert (19) which is placed on the cup (18) and provided stationary, the first through-opening (14) for the heating medium being provided on the regulation insert (19) and the cup (18) together with the regulation insert (19) defining an effective space (15), which accommodates the longitudinally displaceable sleeve (20), of the rate regulation module (2).

8. Flow rate regulator according to claim 7, **characterised in that** the regulation insert (19) is formed beaker-shaped and/or **in that** the first flow opening (14) is provided on the regulation insert (19) on the outer surface.

9. Flow rate regulator according to any of claims 1 to 8, **characterised in that** a sieve (24) for the heating medium is provided on the rate regulation module (2) on the inlet side.

10. Flow rate regulator according to claim 9, **characterised in that** the sieve (24) engages around the regulation insert (19) in the region of the first flow opening (14) on the outer surface and/or on the end face.

## Revendications

1. Régulateur de débit pré-réglable pour une installation de chauffage, comportant un boîtier (1), qui présente une tubulure d'admission (4) pour un milieu chauffant, une tubulure d'évacuation (5) pour le milieu chauffant et une tubulure de pré-réglage (6), comportant un module de régulation de débit (2) qui modifie un débit du milieu chauffant en fonction d'un préréglage, et comportant une manette (3) qui coopère avec un élément du module de régulation de débit (2) qui est monté mobile afin de prérégler le débit, dans lequel le module de régulation de débit (2) prévoit un pot prévu fixe (18) comportant un évidement, un cône (21) s'engageant à chaque fois par sections dans l'évidement ainsi qu'une douille (20) disposée mobile axialement dans le pot (18) et qui présente, sur une face frontale en regard de l'évidement, un cône intérieur qui forme un orifice de la douille (20) et définit, en coopération avec le cône (21), un interstice de débit annulaire pour le milieu chauffant, dans lequel, en fonction d'une position relative entre le pot (18) et la douille (20), une section transversale de débit d'un premier orifice de débit (14) varie, et par le biais dudit orifice le milieu chauffant est acheminé au module de régulation de débit (2) et dans lequel le cône (21) est prévu mobile, **caractérisé en ce que**, par un actionnement de la manette (3) par le biais d'un élément de transmission coopérant avec la manette (3) d'une part et le cône (21) d'autre part, le cône (21) du module de régulation de débit (2) exécute un mouvement combiné en rotation et en longueur de telle sorte qu'une position relative se modifie entre l'évidement dans le pot (18) et le cône (21), ce qui permet qu'une section transversale de débit est réglable entre le cône (21) et le second orifice de débit (16) prévu sur le pot (18), et **en ce que**, sur l'élément de transmission, une section de déplacement (27) guidant le cône (21) est prévue et présente, pour transmettre le mouvement de rotation de la manette (3) sur le cône (21), une géométrie en coupe transversale différente d'une forme circulaire et qui s'engage à chaque fois par section dans un évidement (28) prévu sur le cône (21), dans lequel, pour réaliser le déplacement longitudinal entre l'évidement (28) et la section de déplacement (27), un ajustement avec jeu est configuré.

2. Régulateur de débit selon la revendication 1, **caractérisé en ce que** le cône (21) présente, pour convertir un mouvement de rotation de la manette (3) en un mouvement longitudinal, un élément de guidage (25) qui s'engage et/ou est guidé dans une rainure de guidage (26) du module de régulation de débit (2) configurée de manière correspondante et prévue fixe pendant l'actionnement de la manette (3).

3. Régulateur de débit selon la revendication 2, **caractérisé en ce que** l'élément de guidage (25) et la rainure de guidage (26) sont configurés sous forme de filet et coopèrent l'un avec l'autre.

4. Régulateur de débit selon une des revendications 1 à 3, **caractérisé en ce que** la manette (3) et/ou un ensemble de régulation (7) d'un régulateur de température sont maintenus fixes en rotation sur l'élément de transmission et **en ce que** le cône (21) est maintenu fixe en rotation et mobile axialement sur l'élément de transmission.

5. Régulateur de débit selon une des revendications 1 à 4, **caractérisé en ce que** l'élément de transmission est configuré en forme de goupille et/ou **en ce que** l'élément de transmission d'une part et la manette (3) et/ou le cône (21) et/ou la douille (20) et/ou le pot (18) d'autre part sont prévus coaxiaux les uns par rapport aux autres.

6. Régulateur de débit selon la revendication 4 ou 5, **caractérisé en ce que** le boîtier (1) reçoit le bloc de régulation (7) et **en ce que** le bloc de régulation (7) présente une goupille de capteur (8) qui coopère avec un capteur de température du régulateur de température et qui est prévue en tant qu'élément de transmission.

7. Régulateur de débit selon une des revendications 1 à 6, **caractérisé en ce que** le module de régulation de débit (2) présente une garniture de régulation (19) prévue fixe et appliquée sur le pot (18), dans lequel, sur la garniture de régulation (19), le premier orifice de débit (14) est prévu pour le milieu chauffant et dans lequel le pot (18) définit, conjointement avec la garniture de régulation (19), une zone active (15) du module de régulation de débit (2) qui reçoit la douille (20) qui peut se déplacer longitudinalement.

8. Régulateur de débit selon la revendication 7, **caractérisé en ce que** la garniture de régulation (19) est configurée en forme de gobelet et/ou **en ce que** le premier orifice de débit (14) est prévu, côté revêtement, sur la garniture de régulation (19).

9. Régulateur de débit selon une des revendications 1 à 8, **caractérisé en ce que**, sur le module de régulation de débit (2), côté admission, est prévu un tamis (24) pour le milieu chauffant.

10. Régulateur de débit selon la revendication 9, **caractérisé en ce que** le tamis (24) entoure, côté revêtement et/ou côté frontal, la garniture de régulation (19) au niveau du premier orifice de débit (14).
